# EUROPÄISCHE PATENTSCHRIFT

(11) **EP 2 433 039 B1**
(45) Veröffentlichungstag und Bekanntmachung des Hinweises auf die Patenterteilung: **17.06.2015**
(21) Anmeldenummer: 10717086.2
(22) Anmeldetag: 15.04.2010
(51) Int. Cl.: F16K 1/46

(54) **VENTIL**
VALVE
VANNE

(30) Priorität: 19.05.2009 DE 102009003227
(43) Veröffentlichungstag der Anmeldung: 28.03.2012
(73) Patentinhaber: Robert Bosch GmbH, 70442 Stuttgart (DE)
(72) Erfinder: PFETZER, Johannes, 77815 Buehl (DE); KOTLARSKI, Thomas, 77815 Buehl (DE); BRAUN, Johann, 77815 Buehl (DE); HILS, Alois, 77880 Sasbach (DE); SCHOENEMANN, Anja, 77815 Buehl (DE); SCHMID, Joerg, 77855 Achern (DE); MAHFOUDH, Samir, 77815 Buehl (DE)
(86) Internationale Anmeldenummer: PCT/EP2010/054931
(87) Internationale Veröffentlichungsnummer: WO 2010/133406

(56) Entgegenhaltungen:
- DE-A1- 1 933 000
- DE-A1- 3 636 739
- US-A- 4 064 904
- US-A- 4 773 442
- US-A- 6 095 186

## Beschreibung

Die Erfindung betrifft ein Ventil zum Steuern eines Volumenstroms aufweisend ein Ventilgehäuse mit einer Anschlussöffnung, wobei an der Anschlussöffnung ein Dichtelement für ein Schließglied angeordnet ist, wobei das Dichtelement durch eine Distanzhülse gegen einen Anschlag verspannt ist.

### Stand der Technik

Ein Kühlkreislauf eines Kraftfahrzeuges beinhaltet üblicherweise eine zu kühlende Wärmequelle, z.B. eine Brennkraftmaschine, die mittels eines Kühlmittels durch freie oder erzwungene Konvektion gekühlt wird. Die Temperaturdifferenz über der Wärmequelle ist vom Wärmeeintrag und von der Größe des Volumenstroms des Kühlmittels abhängig. Um einerseits die Brennkraftmaschine vor dem Überhitzen zu schützen und andererseits die Abwärme der Brennkraftmaschine beispielsweise zur Beheizung des Fahrgastraums eines Kraftfahrzeuges zu nutzen, wird in der Brennkraftmaschine ein Kühlmittel umgepumpt, dass die überschüssige Wärmeenergie aus der Verbrennung aufnimmt und in gewünschten Maße abführt. Über einen im Kühlerzweig angeordneten Kühler oder Radiator wird die überschüssige Wärmemenge des Kühlmittels an die Umgebung abgegeben. Ein Heizungswärmetauscher erwärmt die durch ihn strömende Luft zur Beheizung des Fahrgastraums. Die Verteilung des Kühlmittelstroms auf die verschiedenen Zweige des Kühl- bzw. Heizungskreislaufes der Brennkraftmaschine wird üblicherweise durch ein Ventil gesteuert.

Hierzu werden elektrisch ansteuerbare Ventile eingesetzt. Diese verfügen über eine asymmetrisch angeordnete Ein- und Auslassöffnung und einen zylinderähnlichen Ventilgehäuseinnenraum, in dem ein Dichtkegel an einer Hubstange verschieblich als Schließglied gelagert ist und gegen ein Dichtelement drückt, sofern das Ventil geschlossen ist. Das Dichtelement ist an der Einlassöffnung angeordnet und wird mittels einer Distanzhülse durch eine Anschlussplatte gegen einen Anschlag im Ventilgehäuse verspannt.

Aus der US 6,095,186 und der US 4,773,442 ist ein Steuerventil mit einer Distanzhülse bekannt, wobei die Distanzhülse ein Dichtelement gegen ein weiteres Bauteil befestigt. Die Distanzhülse weist dabei mehrere gleichmäßig entlang des Umfangs angeordnete Öffnungen auf.

Aus der DE 36 36 439 A1 ist ebenso ein Ventil bekannt, bei dem ein Dichtelement mittels einer Distanzhülse im Gehäuse des Ventils befestigbar ist.

Aus der US 4,064,904 ist ein Ventil mit den Merkmalen des Oberbegriffs bekannt.

### Offenbarung der Erfindung

Es ist Aufgabe der Erfindung, ein verbessertes Ventil bereitzustellen.

Diese Aufgabe wird durch ein Ventil gemäß Anspruch 1 gelöst. Bevorzugte Ausführungsformen sind in den abhängigen Ansprüchen angegeben.

Erfindungsgemäß wurde erkannt, dass ein asymmetrisches Verspannen des Dichtelements durch die Distanzhülse dadurch vermieden werden kann, indem das Dichtelement an der Distanzhülse form- und/oder stoffschlüssig befestigt ist.

Auf diese Weise kann der Kraftfluss für die Verspannung der Distanzhülse an dem Dichtelement vorbeigeführt werden. Da das Dichtelement an der Distanzhülse form- und/oder stoffschlüssig befestigt ist, ist das Dichtelement symmetrisch verspannt, sodass der Dichtkegel des Schließgliedes zuverlässig den Volumenstrom durch das Ventil unterbricht.

Gemäß einer weiteren Ausführungsform der Erfindung weist die Distanzhülse eine axiale Endfläche auf, die teilweise durch das Dichtelement überdeckt ist und einem Anschlag zugewandt ist. Auf diese Weise wird sichergestellt, dass das Dichtelement sicher und zuverlässig zwischen der Distanzhülse und dem Anschlag befestigt ist, um die Distanzhülse am Anschlag gegenüber dem Ventilgehäuse abzudichten.

Erfindungsgemäss weist die Distanzhülse an der axialen Endfläche, die dem Anschlag zugewandt ist, eine radial umlaufende Nut auf, wobei in die Nut das Dichtelement eingreift. Dies hat den Vorteil, dass das Dichtelement an seiner ersten Dichtfläche an der axialen Endfläche der Distanzhülse in unverbautem Zustand sicher und zuverlässig befestigt ist, sodass die Dichtfläche des Dichtelements während der Montage im Ventilgehäuse an der Distanzhülse nicht verrutscht.

In einer weiteren Ausführungsform der Erfindung ist in der axialen Endfläche der Distanzhülse eine Ringfläche angeordnet. Die Ringfläche weist dabei zur axialen

Endfläche einen Absatz auf und das Dichtelement ist zwischen dem Anschlag und der Ringfläche der Distanzhülse eingespannt. Dies hat den Vorteil, dass die Verspannungskräfte nicht wie üblicherweise über das Dichtelement zum Anschlag geleitet werden, sondern dass sich die Distanzhülse am Anschlag abstützt und so die Vorspannung auf das Dichtelement unabhängig von der Vorspannung der Distanzhülse einstellbar ist.

In einer weiteren Ausführungsform der Erfindung weist das Dichtelement zumindest an einer zweiten Umfangsfläche eine zweite Ausnehmung auf, wobei die Distanzhülse gegenüberliegend zur zweiten Umfangsfläche des Dichtelements an einer ersten Umfangsfläche eine zweite Ausbuchtung aufweist, die in die zweite Ausnehmung des Dichtelements eingreift. Dies hat den Vorteil, dass ein radiales Verdrehen des Dichtelements gegenüber der Distanzhülse verhindert wird.

Erfindungsgemäss weist die Distanzhülse an einer inneren ersten Umfangsfläche eine erste radial umlaufende Ausbuchtung auf. Das Dichtelement weist an zumindest einer der Distanzhülse zugeordneten äusseren ersten Umfangsfläche eine erste radial umlaufende Ausnehmung auf, wobei die erste Ausbuchtung in die erste Ausnehmung der Distanzhülse eingreift. Dies hat den Vorteil, dass ein axiales Verschieben des Dichtelements gegenüber der Distanzhülse verhindert wird.

In einer weiteren Ausführungsform der Erfindung weist das Dichtelement an einer Dichtfläche, die dem Anschlag zugeordnet ist, einen radial umlaufenden wulstartigen Bereich auf. Auf diese Weise wird sichergestellt, dass der wulstartig radial umlaufende Bereich unter Verspannung sauber und zuverlässig am Anschlag zum Liegen kommt.

In einer weiteren Ausführungsform der Erfindung weist die Distanzhülse im Bereich der Ringfläche eine wulstartig radial umlaufende dritte Ausbuchtung auf, die dem Dichtelement zugewandt ist und im Wesentlichen parallel zu dem wulstartig radial umlaufenden Bereich des Dichtelements verläuft. Auf diese Weise wird sichergestellt, dass das Dichtelement zuverlässig abdichtend am Anschlag des Ventilgehäuses anliegt und die Vorspannkraft am Dichtelement lokal abhängig einstellbar ist.

In einer weiteren Ausführungsform der Erfindung ist die Distanzhülse mit dem Dichtelement in einem Zwei-Komponenten-Spritzgussverfahren hergestellt wobei die Distanzhülse und das Dichtelement zwei verschiedene Materialien aufweisen. Auf diese Weise sind die Distanzhülse und das Dichtelement einfach und zuverlässig herstellbar.

Nachfolgend wird die Erfindung anhand von Figuren näher erläutert. Dabei zeigt:
Fig. 1 eine schematische Schnittansicht durch ein Ventil gemäß des Standes der Technik;
Fig. 2 und Fig. 3 eine schematische 3D-Darstellung einer Distanzhülse eines Ventils gemäß des Standes der Technik;
Fig. 4 einen räumlichen Halbschnitt durch eine Distanzhülse und ein Dichtelement eines Ventils entlang ihrer Längsachse gemäß einer ersten Ausführungsform;
Fig. 5 eine räumliche Explosionszeichnung einer Distanzhülse und eines Dichtelements eines Ventils gemäß der Fig. 4; und
Fig. 6 einen Ausschnitt einer Schnittansicht durch ein Ventil gemäß einer zweiten Ausführungsform.

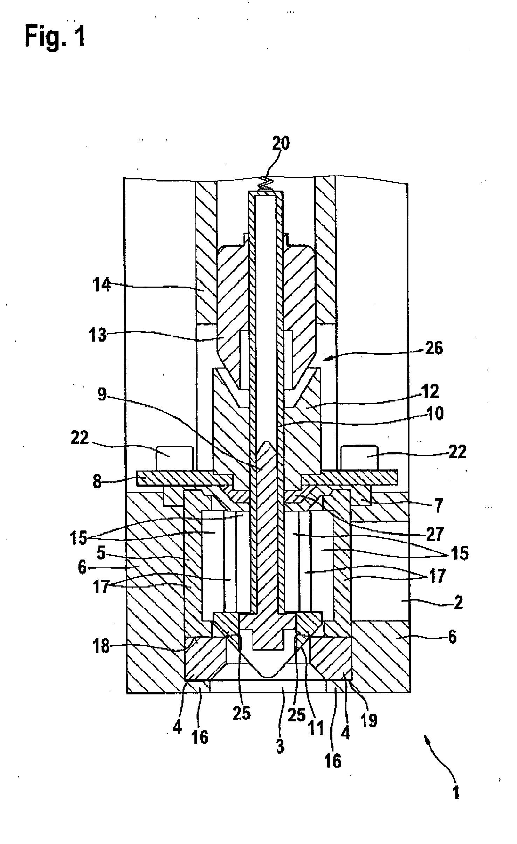

Fig. 1 zeigt eine schematische Schnittansicht durch ein Ventil 1 gemäß des Standes der Technik. Das Ventil 1 weist dabei ein Ventilgehäuse 6 auf, das einen Ventilgehäuseinnenraum umschließt, wobei der Ventilgehäuseinnenraum im Ventilgehäuse 6 unterseitig eine erste Anschlussöffnung 3 und rechtsseitig an einer Seitenfläche des Ventilgehäuses 6 eine zweite Anschlussöffnung 2 aufweist. Das Ventilgehäuse 6 weist an der ersten Anschlussöffnung 3 einen ringflächigen Anschlag 16 auf, an dem ein ringförmiges erstes Dichtelement 4 anliegt. Der Ventilgehäuseinnenraum ist hohlzylinderähnlich ausgebildet und erstreckt sich über die gesamte Höhe des Ventilgehäuses 6. Oberhalb des ersten Dichtelementes 4 liegt eine erste Distanzhülse 5 an dem ersten Dichtelement 4 an. An der Oberseite des Ventilgehäuses 6 ist eine Anschlussplatte 8 mit einer Dichtmanschette 7 angeordnet, wobei die Dichtmanschette 7 zwischen der Anschlussplatte 8 und dem Ventilgehäuse 6 verspannt ist und das Ventilgehäuse 6 nur einen Teilbereich der Unterseite der Dichtmanschette 7 bedeckt. Die Anschlussplatte 8 ist mittels Schrauben 22 am Ventilgehäuse 6 befestigt. Die Dichtmanschette 7 liegt mit ihrer Unterseite in einem weiteren Teilbereich auf der Oberseite der Distanzhülse 5 auf. Die Durchführung eines Stiftes 9 durch die Dichtmanschette 7 wird durch eine Dichtbuchse 27 abgedichtet.

Die erste Distanzhülse 5 ist hohlzylindrisch ausgebildet weist einen oberen und einen unteren Bereich auf, wobei der obere und der untere Bereich durch eine Mehrzahl von Verbindungsstegen 17 verbunden ist. Die Verbindungsstege 17 sind balkenförmig ausgebildet. Die Verbindungsstege 17 sind in unverbautem Zustand radial nach außen gewölbt und liegen in verbautem Zustand an den Innenflächen des Ventilgehäuses 6 an. Der untere Bereich der ersten Distanzhülse 5 weist eine erste axiale Endfläche 18 auf, die auf der Oberseite des ersten Dichtelements 4 aufstützt.

Das Dichtelement 4 ist ringförmig ausgebildet und weist an einer axialen Endfläche, die dem Anschlag 16 zugewandt ist, eine erste Dichtfläche 19 auf. An einer zweiten Dichtfläche 25 liegt in geschlossener Ventilstellung ein Dichtkegel 11 an. Der Dichtkegel 11 eines Schließgliedes 26 ist mittels eines Stiftes 9 an einer Hubstange 10 befestigt, die auf der Längsachse der ersten Distanzhülse 5 durch das Ventilgehäuse 6 geführt ist, wobei die Hubstange 10 oberseitig aus dem Ventilgehäuse 6 durch die Anschlussplatte 8 aus dem Gehäuse austritt und durch ein Joch 12 geführt wird. Das Joch 12 sitzt mit seiner Unterseite auf der Anschlussplatte 8 auf und weist oberseitig einen konusartigen Bereich auf, wobei in mittiger Lage die Hubstange 10 durch das Joch 12 geführt ist. In einem oberen Bereich der Hubstange 10 ist ein Anker 13 umfangsseitig an der Hubstange 10 befestigt. Der Anker 13 umfasst dabei die Hubstange 10 und weist an seiner Unterseite einen kegelförmigen Bereich auf, der in seiner Kontur im Wesentlichen der Kontur des konusartigen Bereichs des Jochs 12 entspricht. Der weitere Bereich des Ankers 13 ist hohlzylindrisch ausgebildet und wird in einem Teilbereich durch einen Rückschlussring 14 radial umfasst.

Der Anker 13 weist eine Mehrzahl von nicht dargestellten Wicklungen auf, die im bestromten Zustand ein elektromagnetisches Feld aufbauen. Der Rückschlussring 14 führt das elektromagnetische Feld des Ankers 13 im Anker 13. Das Magnetfeld führt zu einem Aufbau einer elektromagnetischen Anziehungskraft zwischen dem Anker 13 und dem Joch 12, welche zu einer Verschiebung des Ankers 13 und somit der gesamten Hubstange 10 in Richtung des Joches 12 führt. Die Hubstange 10 wird durch die Feder 20 zurückgezogen, wenn die Anziehungskraft zwischen dem Anker 13 und dem Joch 12 bzw. die an den Wicklungen des Ankers 13 anliegende Spannung reduziert wird. Durch eine Variation der anliegenden Spannung ist der Abstand zwischen der kegelförmigen Kontaktfläche des Ankers 13 und der konusartigen Kontaktfläche des Jochs 12 so einstellbar, dass der Volumenstrom durch das Ventil steuerbar ist. Durch eine Verschiebung des Schließgliedes 26 in Richtung des Joches 12 wird ebenso der Dichtkegel 11 an das Dichtelement 4 geführt. Liegt der Dichtkegel 11 mit seiner kegelförmigen Umfangsfläche an der Kontaktfläche des ersten Dichtelements 4 an, so wird der Volumenstrom durch das Ventil unterbrochen.

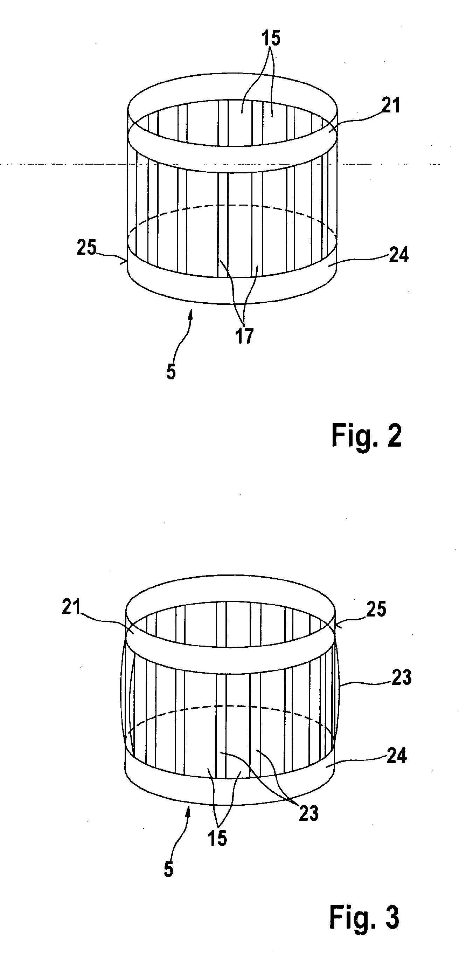

Das erste Dichtelement 4 wird über die erste Distanzhülse 5, die Dichtmanschette 7 und die Anschlussplatte 8 gegen den Anschlag 16 verspannt, damit die Dichtflächen am ersten Dichtelement 4 zuverlässig abdichten, aber auch um Fertigungstoleranzen auszugleichen. Wird das Ventil 1 durch das Ventilgehäuse 6 strömende Kühlmittel erwärmt, so dehnt sich die Distanzhülse 5 durch ihren rotationssymmetrischen Aufbau gleichmäßig entlang ihrer Längsachse aus, sodass das erste Dichtelement 4 zusätzlich zur Ausgangsverspannung symmetrisch verspannt wird. Der Volumenstrom des Kühlmittels strömt durch die erste Anschlussöffnung 2 unterseitig am Dichtkegel 11 in das Ventilgehäuse 6 und wird in seinem Volumenstrom durch den Spalt zwischen dem Dichtelement 4 und des Dichtkegels 11 gesteuert. Durch die symmetrische Ausgestaltung der ersten Dichtelements 5 neigt die Distanzhülse bei einer Erwärumung durch das Kühlmittel nicht zu einer asymmetrischen Längenänderung, sodass das erste Dichtelement gleichmäßig verspannt ist. Dadurch kann der Dichtkegel auch bei einem erwärmten Ventil zuverlässig den Kühlmittelstrom steuern und unterbrechen. Das Kühlmittel strömt nach dem Spalt zwischen dem Dichtkegel 11 und dem ersten Dichtelement 5 weiter innerhalb der ersten Distanzhülse 5 und verlässt die erste Distanzhülse 5 seitlich durch eine Mehrzahl von Öffnungen 15 in der Umfangsfläche der ersten Distanzhülse 5 und strömt durch die zweite Anschlussöffnung 2 aus dem Ventilgehäuse 6. Durch die vorzugsweise rotationssymmetrische gleichmäßige Anordnung von Öffnungen 15, deren Querschnitte vorzugsweise gleich sind, ist eine radiale Ausrichtung der ersten Distanzhülse 5 bei der Montage nicht notwendig. Die erste Distanzhülse 5 entspricht der in Fig. 2 und Fig. 3 gezeigten unverbauten Distanzhülsen. Die Verbindungsstege 17 sind im Stand der Technik balkenförmig um die erste Distanzhülse 5 einfach in einem Spritzgussverfahren herzusteilen, aber auch um die Kräfte aus der Verspannung der ersten Distanzhülse 5 zuverlässig zu übertragen.

Fig. 2 und Fig. 3 zeigen jeweils eine schematische 3D-Darstellung einer ersten Distanzhülse 5 eines Ventils 1 gemäß des Standes der Technik. Dabei zeigt Fig. 2 die erste Distanzhülse 5 in eingebautem Zustand, wohingegen Fig. 3 die erste Distanzhülse 5 in unverbautem Zustand darstellt. Die erste Distanzhülse 5 weist einen oberen Bereich 21 und einen unteren Bereich 24 auf, die mittels Verbindungsstegen 17 miteinander verbunden sind. Die Verbindungsstege 17 sind durch eine Mehrzahl von Öffnungen 15 zwischen den Verbindungsstegen 17 unterbrochen. Die Verbindungsstege 17 sind im Stand der Technik balkenförmig ausgeführt, um einfach die erste Distanzhülse 5 in einem Spritzgussverfahren herzustellen, wobei durch die eingebrachten Öffnungen 15 das benötigte Werkstoffvolumen gegenüber einer Distanzhülse gemäß des Standes der Technik reduziert ist. Durch die balkenförmigen Verbindungsstege 15 weisen die Öffnungen 15 einen im Wesentlichen rechteckförmigen Querschnitt auf. Alternativ können die Öffnungen 15 aber auch andere Querschnitt beispielsweise ellipsenförmig, kreisförmig oder polyederförmig ausgebildet sein.

In unverbautem Zustand weist die erste Distanzhülse 5, wie in Fig. 3 gezeigt nach außen gewölbte Verbindungsstege 17 auf. Dies hat den Vorteil, dass sich die erste Distanzhülse 5 durch die Außenflächen der nach außen gewölbten Verbindungsstege 17 sich selbstständig im Ventilgehäuseinnenraum zentriert. Durch die regelmäßige Verteilung der Verbindungsstege 17 entlang des Umfangs sind auch die Öffnungen 15 in einer Umfangsfläche 25 gleichmäßig verteilt, sodass eine Ausrichtung der Öffnungen 15 gegenüber einer Anschlussöffnung nicht notwendig ist. Dies hat zur Folge, dass bei einer Erwärmung der ersten Distanzhülse 5 die axialen Endflächen der ersten Distanzhülsen 5 sich in axialer Richtung gleichmäßig verschieben. Des Weiteren neigt die Längsachse der ersten Distanzhülse 5 gegenüber einer Distanzhülse gemäß dem Stand der Technik nicht zu einem seitlichen Abkippen bei Erwärmung der Distanzhülse 5.

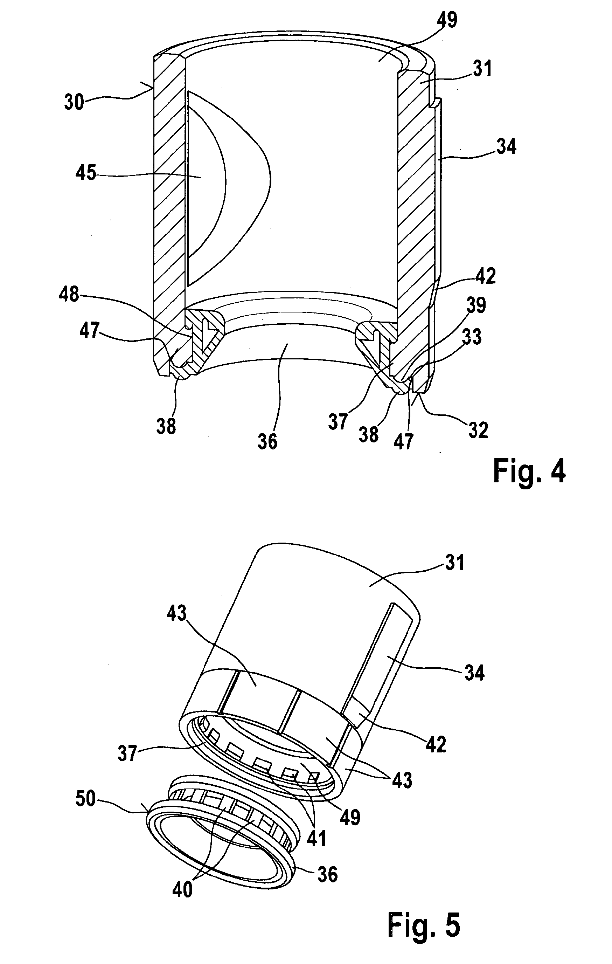

Fig. 4 zeigt einen Halbschnitt durch eine zweite Distanzhülse 31 und ein zweites Dichtelement 36 eines Ventils gemäß einer ersten Ausführungsform. Die zweite Distanzhülse 31 ist mit dem zweiten Dichtelement 36 form- und/oder stoffschlüssig verbunden und kann in dem in Fig. 1 gezeigtem Ventil anstelle der dort gezeigten Distanzhülse und des dort gezeigten Dichtelements eingesetzt sein. Die zweite Distanzhülse 31 und das zweite Dichtelement 36 sind hohlzylindrisch aufgebaut, wobei deren Längsachsen aufeinander liegen. Die zweite Distanzhülse 31 weist linksseitig in einer dritten Umfangsfläche 30 eine Öffnung 45 auf.

Etwa gegenüberliegend der Öffnung 45 ist an der dritten Umfangsfläche 30 eine Zentrierrippe 34 angeordnet, die einen rechteckförmigen Querschnitt aufweist. Axiale Endflächen der Zentrierrippe 34 sind oberseitig rechtwinklig und unterseitig mit einer Schräge 42 ausgebildet. Die Zentrierrippe 34 ragt dabei aus der dritten Umfangsfläche 30 der zweiten Distanzhülse 31 heraus und ist dazu ausgelegt in eine korrespondierende Nut im Ventilgehäuse einzugreifen. Die Ausrichtung der Öffnung 45 wird durch die Zentrierrippe 34 gewährleistet, die in eine korrespondierende Nut im Ventilgehäuse eingreift und so die radiale Ausrichtung der Öffnung 45 der Distanzhülse 31 festlegt. Die Schräge 42 soll bei der Montage der Distanzhülse 31 das Einführen der Zentrierrippe 34 in die Nut im Ventilgehäuse erleichtern.

Eine untere axiale zweite Endfläche 32 der zweiten Distanzhülse 31 ist zumindest teilweise durch das zweite Dichtelement 36 überdeckt. Die axiale zweite Endfläche 32 weist dabei eine radial umlaufende Nut 33 auf, in die das zweite Dichtelement 36 eingreift. Auf diese Weise wird sichergestellt, dass das zweite Dichtelement 36 während der Montage in dem Ventilgehäuse des in Fig. 1 gezeigten Ventils nicht von der axialen zweiten Endfläche 32 abrutscht, um so ein zuverlässiges Anliegen des zweiten Dichtelementes 36 am in Fig. 1 gezeigten Anschlag an der Anschlussöffnung zu gewährleisten. Die axiale zweite Endfläche 32 liegt im verbauten Zustand an dem Anschlag des Ventilgehäuses an, wobei in der axialen Endfläche 32 eine Ringfläche 47 angeordnet ist, die von einer inneren ersten Umfangsfläche 49 der Distanzhülse 31 begrenzt ist und radial in der axialen zweiten Endfläche 32 verläuft. Die Ringfläche 47 weist zur axialen Endfläche 32 einen Absatz auf, sodass das zweite Dichtelement 36 In eingebautem Zustand zwischen der Ringfläche 47 und dem Anschlag des Ventilgehäuses eingespannt ist, wobei die Vorspannkraft durch das axiale Übermaß des zweiten Dichtelements 36 gegenüber der am Anschlag anliegenden axialen zweiten Endfläche 32 bestimmt ist.

Die zweite Distanzhülse 31 weist an ihrer ersten Umfangsfläche 49 eine erste radial umlaufende Ausbuchtung 37 auf, wobei das zweite Dichtelement 36 an zumindest einer der zweiten Distanzhülse 31 zugeordneten zweiten Umfangsfläche 50 eine erste radial umlaufende Ausnehmung 48 aufweist. Die zweite Ausbuchtung 37 greift dabei in die erste Ausnehmung 48 des Dichtelementes 36 ein. Auf diese Weise wird ein axiales Verschieben des zweiten Dichtelementes 36 gegenüber der zweiten Distanzhülse 31 verhindert. Um ein sauberes Anliegen des zweiten Dichtelementes 36 am Anschlag zu gewährleisten, weist das zweite Dichtelement 36 an einer Dichtfläche, die dem Anschlag zugeordnet ist, einen radial umlaufenden wulstartigen Bereich 38 auf, der über die zweite axiale Endfläche 32 der zweiten Distanzhülse 31 im unverbauten Zustand hervorsteht. In eingebautem Zustand wird der wulstartige Bereich 38 am Anschlag elastisch so verformt, dass die axiale Endfläche 32 und der wulstartige Bereich 38 auf dem Anschlag aufliegen. In einer Ausführungsform steht das zweite Dichtelement 36 in unverbautem Zustand etwa 0,3 bis 0,7 mm über die axiale Endfläche 32 der zweiten Distanzhülse 31 über. Die zweite Distanzhülse 31 weist in der Ringfläche 47 eine radial umlaufende dritte Ausbuchtung 39 auf, die dem zweiten Dichtelement 36 zugewandt ist und im Wesentlichen parallel zu dem wulstartig radial umlaufenden Bereich 38 des Dichtelementes 36 verläuft. Auf diese Weise wird gewährleistet, dass derwulstartige Bereich 38 am Anschlag durch die dritte Ausbuchtung 39 optimal angepresst wird.

Fig. 5 zeigt eine 3D Explosionszeichnung der zweiten Distanzhülse 31 und des zweiten Dichtelementes 36 eines Ventils gemäß der Fig. 4. Die zweite Distanzhülse 31 weist an der inneren ersten Umfangsfläche 49 eine zweite Ausbuchtung 41 auf, wobei das zweite Dichtelement 36 gegenüberliegend an einer zweiten Umfangsfläche 50 die zweite Ausnehmung 40 aufweist, in die die zweite Ausbuchtung 41 der zweiten Distanzhülse 31 eingreift. Auf diese Weise kann ein radiales Verdrehen des zweiten Dichtelementes 36 gegenüber der zweiten Distanzhülse 31 vermieden werden. Des Weiteren ermöglicht die Ausbildung der zweiten Ausnehmung 40 und der zweiten Ausbuchtung 41 eine vergrößerte Anlagefläche des zweiten Dichtelements 36 an der zweiten Distanzhülse 31, sodass bei einer Herstellung der zweiten Distanzhülse 31 und des zweiten Dichtelementes 36 in einem Zwei-Komponenten-Spritzgussverfahren das Dichtelement 36 eine vergrößerte Befestigungsfläche zur Distanzhülse 31 aufweist.

Die zweite Distanzhülse 31 weist an ihrer äußeren dritten Umfangsfläche 30 Pressflächen 43 auf, die in einer Mehrzahl gleichmäßig im unteren Bereich der dritten Umfangsfläche 30 entlang des Umfangs verteilt sind. Die Pressflächen 43 weisen einen rechteckförmigen Querschnitt auf, wobei die Außenfläche über die dritte Umfangsfläche 30 hinausragt. Die Pressflächen 43 liegen in verbautem Zustand an einer Innenwand des Ventilgehäuses an und sind dazu ausgebildet, Kräfte aus der Verspannung des zweiten Dichtelementes 36 gegen den Anschlag im Ventilgehäuse über die Pressflächen 43 in das Ventilgehäuse einzuleiten und/oder die zweite Distanzhülse 31 zusammen mit dem zweiten Dichtelement 36 im Ventilgehäuse zu zentrieren. Hierzu weisen die Pressflächen 43 ein Übermaß zum Innendurchmesser des Ventilgehäuses im Teilbereich der Pressflächen 43 auf. Auf diese Weise kann das zweite Dichtelement 36 am Anschlag vorgespannt werden, wobei zumindest ein Teil der Verspannungskräfte über die Pressflächen 43 in das Ventilgehäuse eingeleitet wird. Die zweite Distanzhülse 31 und das zweite Dichtelement 36 sind in der Ausführungsform in einem Zwei-Komponenten-Spritzgussverfahren hergestellt, wobei die zweite Distanzhülse 31 und das zweite Dichtelement 36 zwei unterschiedliche Materialien mit unterschiedlichen Härten und Materialeigenschaften aufweisen.

Die in Fig. 4 und Fig. 5 gezeigte Ausführungsform der zweiten Distanzhülse 31 und des zweiten Dichtelements 36 ermöglichen ein unabhängiges Einstellen der Anpresskraft auf das zweite Dichtelement 36. Die Anpresskraft auf das zweite Dichtelement 36 ist dadurch unabhängig vom thermischen Ausdehnungsverhalten der in der Verspannungskette befindlichen Bauteile wie der zweiten Distanzhülse 31, des zweiten Dichtelements 36, der Dichtmanschette und der Anschlussplatte. Der Ausgleich der Fertigungstoleranzen der einzelnen Bauteile erfolgt über die elastische Verformung der genannten Bauteile. Die Vorspannkraft auf das zweite Dichtelement 36 wird durch das Übermaß des zweiten Dichtelements 36 gegenüber der zweiten axialen Endfläche 32 festgelegt.

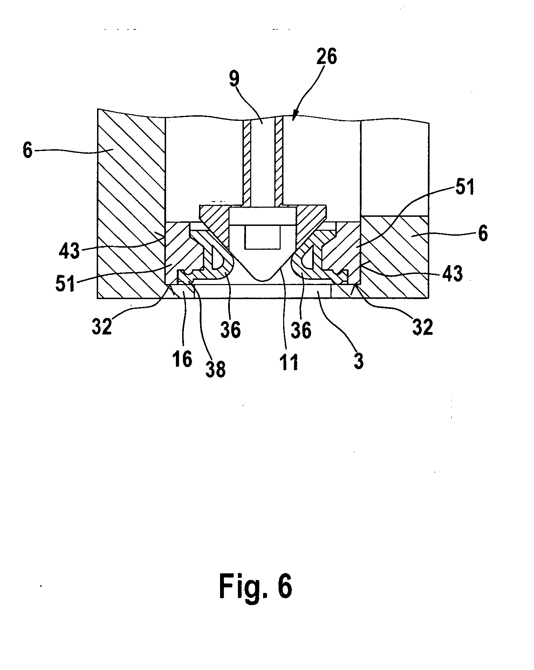

Fig. 6 zeigt einen Ausschnitt einer Schnittansicht durch ein Ventil gemäß einer zweiten Ausführungsform. Hierbei weist das Ventil eine dritte Distanzhülse 51 auf, an der ein in Fig. 4 und 5 gezeigtes zweites Dichtelement 36 formschlüssig befestigt ist. Die dritte Distanzhülse 51 ist an der ersten Anschlussöffnung 3 des Ventils angeordnet. Die dritte Distanzhülse 51 weist dabei Pressflächen 43 auf, die so ausgebildet sind, dass sie die gesamten Kräfte aus der Verspannung des dritten Dichtelements 51 über die Pressflächen 43 in ein Ventilgehäuse 6 einleiten. Vorzugsweise können dabei höhere Kräfte als sie aus der Verspannung des zweiten Dichtelements 36 entstehen über die Pressflächen 43 in das Ventilgehäuse 6 geleitet werden, um so Fertigungstoleranzen des zweiten Dichtelements 36, die zu höheren Verspannungskräften führen können, ebenso in das Ventilgehäuse 6 leiten zu können.

Die dritte Distanzhülse 51 ist dabei gegenüber der in Fig. 4 und 5 gezeigten zweiten Distanzhülse 31 verkürzt und weist keine seitliche Öffnung 45 auf. Sie entspricht in ihrer Ausführungsart der hohlzylindrischen zweiten Distanzhülse 31, wobei deren Ausführung auf den unteren Teilbereich mit den Pressflächen 43 reduziert ist. Die dritte Distanzhülse 51 kann in der Ausführungsform sowohl einstückig als auch mehrstückig mit dem zweiten Dichtelement 36 ausgebildet sein, wobei die Verspannungskräfte ausschließlich über die Pressflächen 43 ins Ventilgehäuse 6 geleitet werden. Die Ausführungsform des zweiten Dichtelements 36 entspricht dabei dem in Fig. 4 und 5 gezeigten zweiten Dichtelements 36. Hierzu weist die dritte Distanzhülse 51 im Bereich des Dichtelements 36 die gleichen Ausnehmungen und Ausbuchtungen auf wie die in Fig. 4 und 5 gezeigte zweite Distanzhülse 31. Zur Unterbrechung des Volumenstroms und zur Vermeidung von Kriechströmen zwischen der Distanzhülse 51 und dem Ventilgehäuse 6 liegt das zweite Dichtelement 36 mit einem wulstartigen Bereich 38 an einem ringflächigen Anschlag 16 an. Die Verspannung des zweiten Dichtelements 36 ist sowohl durch den Abstand der dritten Distanzhülse 51 zum Anschlag 16 als auch durch den Abstands einer Ringfläche 47 der dritten Distanzhülse 51 zur zweiten axialen Endfläche 32 einstellbar. Durch die radiale Abstützung der Verspannungskräfte ist die Toleranzkette gegenüber dem Stand der Technik unterbrochen, so dass das zweite Dichtelement 36 bei einer Erwärmung des Ventils nicht zusätzlich verspannt wird und so ein Schließglied 26 mit einem Dichtkegel 11 zuverlässig sich an der zweiten Dichtfläche 36 des Dichtelements anlegen und den Volumenstrom des Kühlmittels durch das Ventil unterbrechen kann. Des Weiteren ist die Bauweise der dritten Distanzhülse 51 kompakt, sodass auch der Bauraumbedarf im Ventil reduziert ist.

## Patentansprüche

1. Ventil (1) zum Steuern eines Volumenstroms aufweisend ein Ventilgehäuse (6) mit einer Anschlussöffnung (3), wobei an der Anschlussöffnung (3) ein Dichtelement (36) für ein Schließglied (26) angeordnet ist, wobei das Dichtelement (36) durch eine Distanzhülse (31) gegen einen Anschlag (16) verspannt ist, wobei das Dichtelement (36) an der Distanzhülse (31) form- und/oder stoffschlüssig befestigt ist, wobei die Distanzhülse (31) an einer inneren ersten Umfangsfläche (49) eine erste radial umlaufende Ausbuchtung (37) aufweist und das Dichtelement (36) an zumindest einer der Distanzhülse (31) zugeordneten äußeren ersten Umfangsfläche (49) eine erste radial umlaufende Ausnehmung (48) aufweist, wobei die erste Ausbuchtung (37) in die erste Ausnehmung (48) des Dichtelements (36) eingreift, um ein axiales Verschieben des Dichtelements (36) gegenüber der Distanzhülse (31) zu verhindern, **dadurch gekennzeichnet, dass** die Distanzhülse (31) an der axialen Endfläche (32), die dem Anschlag (16) zugewandt ist, eine radialumlaufende Nut (33) aufweist, wobei in die Nut (33) das Dichtelement (36) eingreift.

2. Ventil (1) nach Anspruch 1, **dadurch gekennzeichnet, dass** die Distanzhülse (31) eine axiale Endfläche (32) aufweist, die dem Anschlag (16) zugewandt ist, wobei die axiale Endfläche (32) teilweise durch das Dichtelement (36) überdeckt ist.

3. Ventil nach Anspruch 2, **dadurch gekennzeichnet, dass** in der axialen Endfläche (32) eine Ringfläche (47) angeordnet ist, wobei die Ringfläche (47) zur axialen Endfläche (32) einen Absatz aufweist, und dass das Dichtelement (36) zwischen dem Anschlag (16) und der Ringfläche (47) der Distanzhülse (31) eingespannt ist.

4. Ventil (1) nach einem der Ansprüche 1 bis 3, **dadurch gekennzeichnet, dass** das Dichtelement (36) zumindest an einer zweiten Umfangsfläche (50) eine zweite Ausnehmung (40) aufweist und die Distanzhülse (31) gegenüberliegend zur zweiten Umfangsfläche (50) des Dichtelements (36) an einer ersten Umfangsfläche (49) eine zweite Ausbuchtung (41) aufweist, die in die zweite Ausnehmung (40) des Dichtelements (36) eingreift, um ein radiales Verdrehen des Dichtelements (36) gegenüber der Distanzhülse (31) zu verhindern.

5. Ventil (1) nach einem der Ansprüche 1 bis 4, **dadurch gekennzeichnet, dass** das Dichtelement (36) auf einer Dichtfläche, die dem Anschlag zugewandt ist, einen radial umlaufenden wulstartigen Bereich (38) aufweist.

6. Ventil (1) nach Anspruch 3 , **dadurch gekennzeichnet, dass** die Distanzhülse (31) im Bereich der Ringfläche (47) eine radial umlaufende dritte Ausbuchtung (39) aufweist, die dem Dichtelement (36) zugewandt ist und im Wesentlichen parallel zu einem wulstartig radial umlaufenden Bereich des Dichtelements (36) verläuft.

7. Ventil (1) nach einem der Ansprüche 1 bis 6, **dadurch gekennzeichnet, dass** die Distanzhülse (5; 31; 51) mit dem Dichtelement (4; 36) in einem Zwei-Komponenten-Spritzgussverfahren hergestellt sind, wobei die Distanzhülse (5; 31; 51) und das Dichtelement (4; 36) zwei verschiedene Materialien aufweisen.

## Claims

1. Valve (1) for controlling a volumetric flow, having a valve housing (6) with a connection opening (3), wherein a sealing element (36) for a closing member (26) is arranged on the connection opening (3), wherein the sealing element (36) is braced against a stop (16) by a spacer sleeve (31), wherein the sealing element (36) is fastened to the spacer sleeve (31) in a form-fitted and/or integrally bonded manner, wherein the spacer sleeve (31) has a first radially encircling bulge (37) on an inner first circumferential surface (49), and the sealing element (36) has a first radially encircling recess (48) on at least one outer first circumferential surface (49) assigned to the spacer sleeve (31), wherein the first bulge (37) engages in the first recess (48) of the sealing element (36) in order to prevent an axial displacement of the sealing element (36) in relation to the spacer sleeve (31), **characterized in that** the spacer sleeve (31) has a radially encircling groove (33) on the axial end surface (32) which faces the stop (16), wherein the sealing element (36) engages in the groove (33).

2. Valve (1) according to Claim 1, **characterized in that** the spacer sleeve (31) has an axial end surface (32) which faces the stop (16), wherein the axial end surface (32) is partially covered by the sealing element (36).

3. Valve according to Claim 2, **characterized in that** an annular surface (47) is arranged in the axial end surface (32), wherein the annular surface (47) has a step with respect to the axial end surface (32), and **in that** the sealing element (36) is clamped between the stop (16) and the annular surface (47) of the spacer sleeve (31).

4. Valve (1) according to one of Claims 1 to 3, **characterized in that** the sealing element (36) has a second recess (40) at least on a second circumferential surface (50), and the spacer sleeve (31) has, on a first circumferential surface (49) opposite the second circumferential surface (50) of the sealing element (36), a second bulge (41) which engages in the second recess (40) of the sealing element (36) in order to prevent radial rotation of the sealing element (36) in relation to the spacer sleeve (31).

5. Valve (1) according to one of Claims 1 to 4, **characterized in that** the sealing element (36) has a radially encircling bead-like region (38) on a sealing surface which faces the stop.

6. Valve (1) according to Claim 3, **characterized in that**, in the region of the annular surface (47), the spacer sleeve (31) has a radially encircling third bulge (39) which faces the sealing element (36) and runs substantially parallel to a region of the sealing element (36) that is radially encircling in the manner of a bead.

7. Valve (1) according to one of Claims 1 to 6, **characterized in that** the spacer sleeve (5; 31; 51) is produced together with the sealing element (4; 36) in a two-component injection-moulding process, wherein the spacer sleeve (5; 31; 51) and the sealing element (4; 36) have two different materials.

## Revendications

1. Soupape (1) pour commander un débit volumique, présentant un boîtier de soupape (6) avec une ouverture de raccordement (3), un élément d'étanchéité (36) pour un organe de fermeture (26) étant disposé au niveau de l'ouverture de raccordement (3), l'élément d'étanchéité (36) étant serré contre une butée (16) par une douille d'espacement (31), l'élément d'étanchéité (36) étant fixé par engagement par correspondance de formes et/ou par liaison de matière à la douille d'espacement (31), la douille d'espacement (31) présentant, au niveau d'une première surface périphérique interne (49), un premier renflement radialement périphérique (37) et l'élément d'étanchéité (36) présentant, au niveau d'au moins une première surface périphérique externe (49) associée à la douille d'espacement (31), un premier évidement radialement périphérique (48), le premier renflement (37) s'engageant dans le premier évidement (48) de l'élément d'étanchéité (36), afin d'éviter un déplacement axial de l'élément d'étanchéité (36) par rapport à la douille d'espacement (31), **caractérisée en ce que** la douille d'espacement (31), au niveau de la surface d'extrémité axiale (32) qui est tournée vers la butée (16), présente une rainure radialement périphérique (33), l'élément d'étanchéité (36) s'engageant dans la rainure (33).

2. Soupape (1) selon la revendication 1, **caractérisée en ce que** la douille d'espacement (31) présente une surface extrémité axiale (32) qui est tournée vers la butée (16), la surface d'extrémité axiale (32) étant en partie recouverte par l'élément d'étanchéité (36).

3. Soupape selon la revendication 2, **caractérisée en ce qu'**une surface annulaire (47) est disposée dans la surface d'extrémité axiale (32), la surface annulaire (47) présentant un épaulement par rapport à la surface d'extrémité axiale (32), et **en ce que** l'élément d'étanchéité (36) est serré entre la butée (16) et la surface annulaire (47) de la douille d'espacement (31).

4. Soupape (1) selon l'une quelconque des revendications 1 à 3, **caractérisée en ce que** l'élément d'étanchéité (36) présente, au moins au niveau d'une deuxième surface périphérique (50), un deuxième évidement (40) et la douille d'espacement (31) présente, en regard de la deuxième surface périphérique (50) de l'élément d'étanchéité (36), au niveau d'une première surface périphérique (49), un deuxième renflement (41) qui s'engage dans le deuxième évidement (40) de l'élément d'étanchéité (36), afin d'empêcher une rotation radiale de l'élément d'étanchéité (36) par rapport à la douille d'espacement (31).

5. Soupape (1) selon l'une quelconque des revendications 1 à 4, **caractérisée en ce que** l'élément d'étanchéité (36) présente, sur une surface d'étanchéité qui est tournée vers la butée, une région de type bourrelet radialement périphérique (38).

6. Soupape (1) selon la revendication 3, **caractérisée en ce que** la douille d'espacement (31) présente, dans la région de la surface annulaire (47), un troisième renflement radialement périphérique (39) qui est tourné vers l'élément d'étanchéité (36) et qui s'étend essentiellement parallèlement à une région radialement périphérique en forme de bourrelet de l'élément d'étanchéité (36).

7. Soupape (1) selon l'une quelconque des revendications 1 à 6, **caractérisée en ce que** la douille d'espacement (5 ; 31 ; 51) et l'élément d'étanchéité (4 ; 36) sont fabriqués dans un procédé de moulage par injection à deux composants, la douille d'espacement (5 ; 31 ; 51) et l'élément d'étanchéité (4 ; 36) présentant deux matériaux différents.
